# EUROPEAN PATENT APPLICATION

(11) **EP 1 145 803 A2**
(43) Date of publication of application: **17.10.2001**
(21) Application number: 01109110.5
(22) Date of filing: 12.04.2001
(51) Int. Cl.: B25B 11/00, B23Q 7/00

(54) **Automatic loading and unloading system without waiting times for machine with suction cup retaining means for the manufacture of panels**

(30) Priority: 14.04.2000 IT UD000079
(71) Applicant: Multiax SRL, 33070 Maron di Grugnera (PN) (IT)
(72) Inventor: Nascimben, Marco, 33070 Maron di Brugnera (PN) (IT)
(74) Representative: D'Agostini, Giovanni, Dr.

(57) **Abstract**

Bench machine with suction cups (B) for the manufacture of panels, of the type with upperplaced working groups (GO), characterised by having a back loading and unloading bench, with opposite loading (C1, C2) and unloading (C2,C3,C4) lines, being the said benches in multiple number (B) to allow the loading and unloading of the panels to be worked and processed, independent from the panels in process and this by means of the movement of said working groups (GO) in association to moving means from and for said back movement bench (C1, C2, C3, C4), in order to operate in both opposite directions (c2).

## Description

This invention refers to a machine for the manufacture of panels by means of retaining suction cups with automatic loading and unloading system without waiting times.

The bench with suction cups utilized in such machine is also part of the present invention.

### Field of invention

This invention is preferably used, even if not exclusively, in the field of milling, perforating, moulder machines etc. of panels of various shapes, not necessarily rectangular and solid.

Therefore the machine may be a machine for wood-panel working (Eg. furniture doors) wherein said panels are secured to a surface by suction cups.

### Background art

In prior art machines of such type as for example ITAUD97000001 corresponding to the PCT/IT9800140 are known.

This solution presents a system of movable, raisable and lowerable suction cups substantially supported by a fluid-dynamic cylinder having two chambers for activation of more suction cups for lifting or lowering simultaneously.

### Drawbacks

These machines have however a lot of waiting time for loading and unloading and furthermore this type of solution practically yields impossible to carry out the working of a shaped panel for example not rectangular or with hollow internal parts, for the impossibility to exclude from the involved area a number of suction cups regards to the others outside a rectangular area, therefore it prevents the obtainment of the purpose of the above-mentioned technical field.

### Scope of the invention

The scope of the present innovation is to avoid the above-mentioned drawbacks and therefore to speed up the working line and even to make possible to activate any suction cup, one independently from the other, in function of the desired shape of the panel to work and this without having single dynamic-fluid operating connections for each single suction cup.

Above all the innovation has the scope to reduce the waiting times of the station-working cycle remarkably simplifying the possibility of realization of a machine able to work with a continuous cycle.

### Essence of the invention

The problem is solved as claimed by means of a machine having for the manufacture of panels by means of retaining suction cups, of the type involving at least one panel support bench by means of raisable and lowerable suction cups with a system of double-acting dynamic-fluid cylinder, that is with a lowering upper chamber and lifting lower chamber, having the features of claim 1. Advantageously:
- the said upper chamber has an annular seal in rabbet that, with lowering of the suction cup, widens the surface to the lowering pressure;
- the said system of dynamic-fluid cylinder of said suction cups involves furthermore an intermediate operating chamber, upwards thrust adjuvant, in addition to the lower one;
- the said upper chamber is connected with a single dynamic-fluid pressure net (p1);
- the said intermediate chamber is connected by independent files with a second pressure net (p2), on the x-axis (X);
- the said lower chamber is connected by independent files, orthogonal to the previous, with a third pressure net (p3), on the axis of the ordinates (Y), of a corresponding diagram, or vice versa;
- everything being associated to programming means able to coordinate the respective pressures (p1, p2, p3), in such a way that only a selected suction cup, determined by the crossing of said coordinates (X,Y) is operated at a time, in order that, proceeding for successive steps, only the desired suction cups of the entire suction cup set and/or vice versa may be lowered.

### Advantages of the invention

The advantages obtained with this solution consist speeding-up the working cycle and in the fact that such system can be operated by means of a program, for example computer, selecting only the suction cups involved with a shape, with any shape and this without the need of realizing single connections for each cylinder of each suction cup, but operating only with three pressures of three nets which are connected with the respective ramifications to the respective higher pressure p1, intermediate pressure p2, and lower pressure p3 chambers, by activation for example electromechanics (with electro-valve) of certain lines (X,Y), therefore pressures P2, P3, which intercross determining the suction cups involved in function of the combination.

Advantageously the bench machine with suction cups is of the type with upperplaced working groups, and is characterised by the fact of having a back loading and unloading bench, with opposite loading and unloading lines, being the said desks in multiple number (B) in order to permit the loading and unloading of the panels to be worked and processed, independent from the panels in process and this by the means of the movement of said working groups in association to movement means from and for said back movement bench, in order to operate in both opposite directions.

### Description of an embodiment of the invention

These and other advantages will appear from the following description of a preferential solution of realization, with the aid of the enclosed drawings, whose details are not to be considered limitative but only supplied as an example.

Figure 1 is an axial sectional view of a suction cup.

Figure 2 is a plan-view of a bench with suction cups.

Figures 3 and 4 are side views of said bench to suction cups of Fig.2

Figure 5 is a side schematic view in elevation of a manufacturing machine example, for example with milling heads from above on the said work bench with suction cups.

Figure 6 is a plan-view of an entire machine able to operate with a continuous cycle.

Figure 7 is a frontal view of a machine including the said benches with suction cups (B).

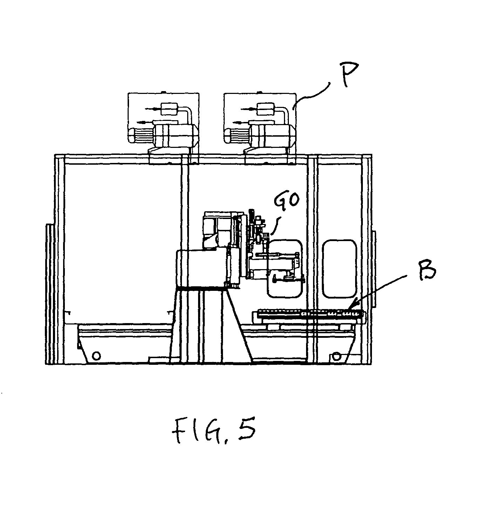

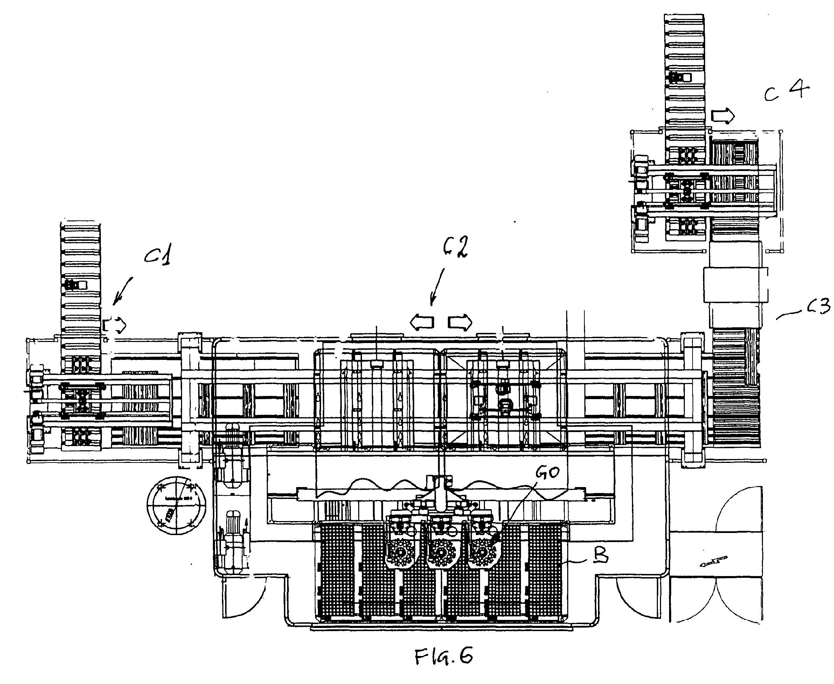

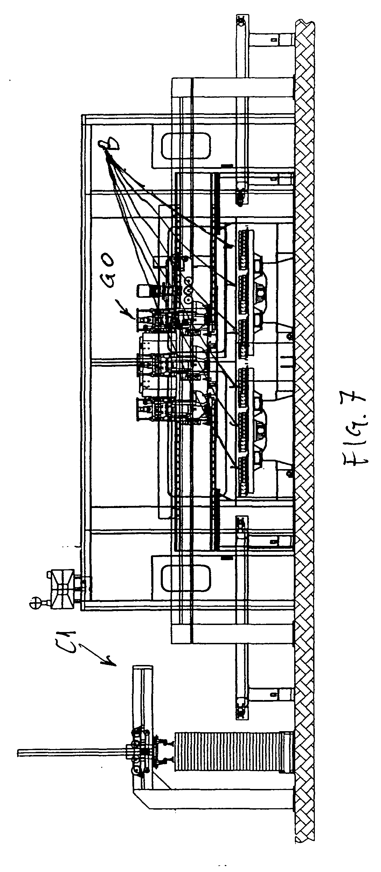

In particular in Fig.6 the benches are seen from above with suction cups B advanced in respect to a back feeding bench for loading and unloading panels to be worked C1, C2, C3, C4.

The system is structured in order that the work benches (B) are always operatively occupied by the upperplaced working groups (GO) without waiting times.

Everything facilitated by the back movement system C1, C2, C3, C4, where C1 has an evident loading system of the panels to be worked.

In other words the benches with suction cups in a preferential solution are six and therefore while in some of them panels to be worked are loaded, from the back bench C1-C2, others are subjected to work with the upperplaced operating groups (GO) and the others are subjected to unload with the back platform C2-C3-C4 in the same sense and opposite to the previous one.

In this way continuous working without dead times is obtained.

The invention substantially relates to a machine for the manufacture of panels by means of retaining suction cups, of the type including at least one support bench (B) for panels by means of raisable and lowerable suction cups (V) with a system of double-acting dynamic-fluid cylinder, that is with lowering upper chamber (P1) and lifting lower chamber (P3), wherein:
- the said upper chamber (P1) has an annular seal in rabbet (21) that, with the lowering of the suction cup, widens the surface of the lowering pressure;
- the said system of dynamic-fluid cylinder of said suction cups: furthermore involves an intermediate operating chamber (P2), upwards thrust adjuvant, in addition to the lower one (P3);
- the said upper chamber is connected with a single dynamic-fluid pressure net (p1);
- the said intermediate chamber is connected by independent files with a second pressure net (p2), on the x-axis (X);
- the said lower chamber is connected by independent orthogonal files to the previous one, with a third pressure net (p3), on the axis of the ordinates (Y), of a corresponding diagram, or vice versa;
- everything being associated to programming means able to coordinate the respective pressures (p1, p2, p3), in such a way that only a selected suction cup, determined by the crossing of said coordinates (X,Y) is operated at a time, in order that, proceeding successive steps, only the desired suction cups of the entire suction cup set and/or vice versa may be lowered.

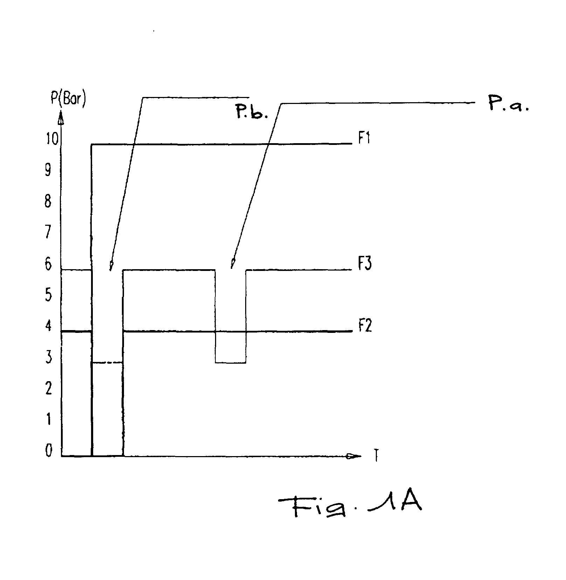

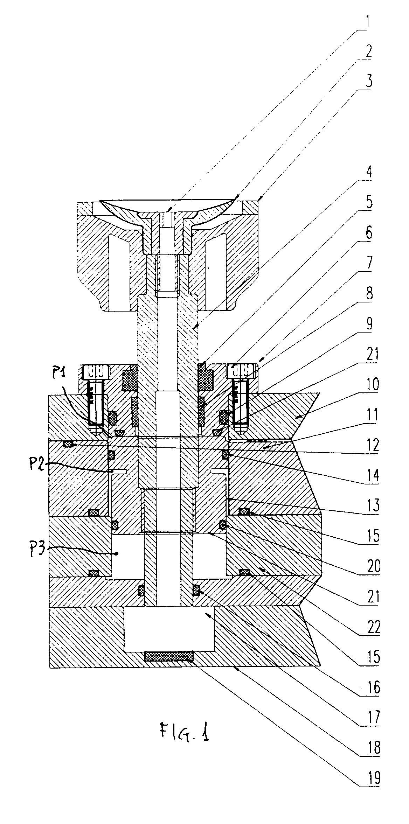

According to figure 1 the three chambers are indicated by P1, P2, P3.

The first upper chamber (P1) is included between the gaskets: upper piston-ring (9) in the upper guide (7), and intermediate piston-ring (14), with the provision, of lowering to enlarge the thrusting section downwards by means of a annular rabbet gasket (21).

The second intermediate chamber (P2), defined between the said intermediate annular gasket (14) and a lower annular gasket (20) in the same intermediate piston (13).

The third lower chamber (P3), defined by the said lower annular gasket (20) of said intermediate piston (13) and a basic annular sealing gasket (P3).

The elements are all decomposable for the maintenance with a base (18) where a conduction chamber of suction for the vacuum formation is provided (16) that axially conducts (1) to the upper suction cup (2), and annular elements that form the lower (22), intermediate (11) and higher chambers (10) all with annular rabbet sealing gaskets (15).

Screw means (6) locking the upper ring (10) with the upper bush (7).

This to facilitate the easy extraction, disassembly and maintenance.

In the following figures the bench (B) with the suction cups (V) that are adjacent to disappearing cylinders (R) of different diameter (R1, R2, R3) is seen in order to form panel support to block before of the sealing suction with the suction cups (V).

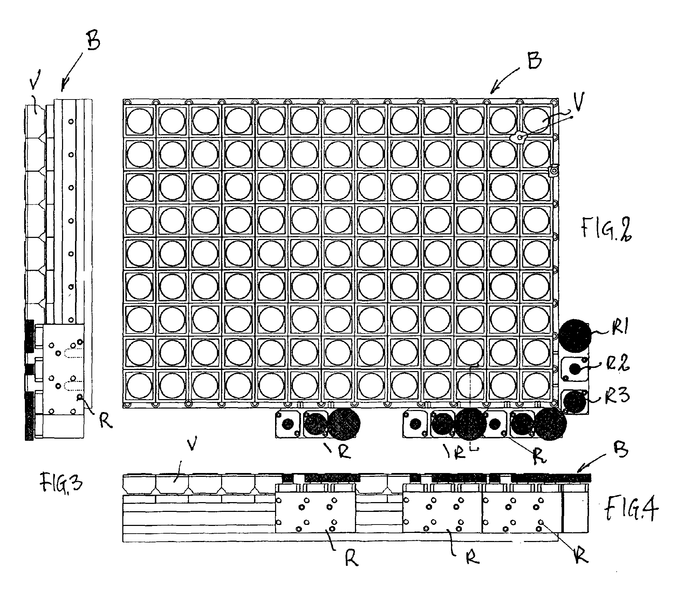

The mechanism works for example as follows:
- All the suction cups (V) are raised, and also the side strikers involved (R);
- The panel to be worked rests on the suction cups (V) on the side strikers (R);
- On the basis of a predetermined program, the lowering control of the suction cups (V) not involved in the panel support is operated;
- The side strikers are lowered, and the panel remains suspended, fixed to the suction cups below, which have remained raised;
- The panel can be processed with the higher operating groups (GO), above the working suction cup bench (B) as indicated in Fig.5, where with (P) for example the compressor arrangements are indicated;
- The workings can be of any type, e.g. milling, drilling, perimetrical moulding both external and internal, drilling, lapping, etc.;
- When the working is completed, the vacuum of the suction cups is suppressed freeing the worked panels;
- The suction cup bench shifts in order to pick-up the machined panel;
- The cycle is repeated with one or more benches operating in an alternative way;

A diagram (See also Figure 1A) is made to understand the movement in lifting, lowering of the suction cups better, the respective diagram of the pressures for the chambers p1, p2, p3, with forces F1, F2, F3.

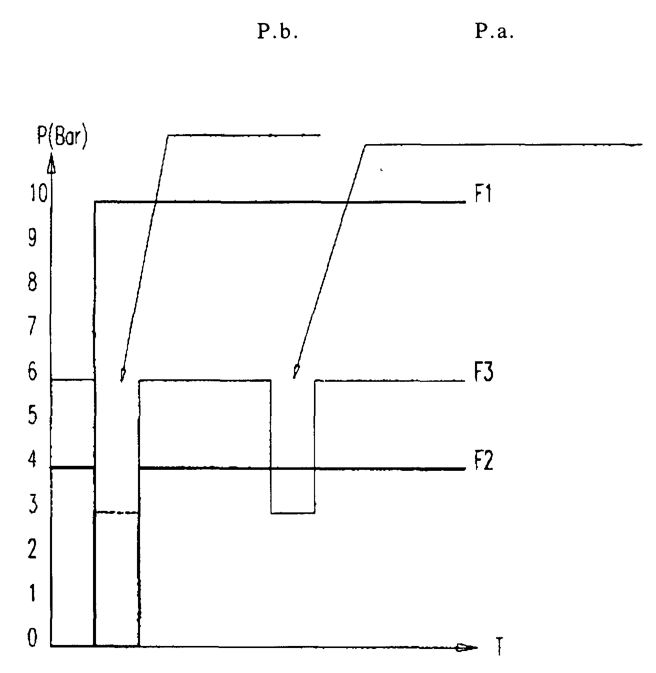

According to the above diagram the time in the abscissas is indicated and the pressure in Bar in the ordinates. The position Pb indicates the piston (suction cup V) lowered and the position Pa indicates the piston (suction cup V) raised.

F1 indicates the force of the piston to the pressure p1 for the upper chamber, F2 the force for the intermediate chamber to the pressure (P2) and the force F3 the pressure of the lower chamber (P3).

The pressure of the upper chamber (P1) is constant of 10 Bar for the lowering.

The pressures of the intermediate (P2) and lower (P3) chambers are respectively 4 and 6 Bar when the respective suction cups are raised, while they become respectively 0 and 3 Bar when the suction cups are lowered.

The maintenance of the lowering of the suction cups not involved in the work (V) occurs for the fact, that when the pressures p2, p3 are lowered, the starting of the movement downwards, is sufficient because the section increase involves the completion of the thrust downwards maintaining the suction cups lowered.

Vice versa, resetting the pressures in P2 and P3 to 4 and 6 Bar, the pistons not involved will always remain lowered, as the pressures are balanced but prevailing the section of the higher pressurized chamber (p1).

If one wants to zero everything in order to raise all the suction cups, it is sufficient to zero the pressure of the higher chambers P1, whose net is common to all the pistons of all the suction cups (V).

Advantageously the benches with suction cups (B) are at least three in order that one is occupied for loading, one for the work and one for the unloading.

Preferably the work benches (B) are six in order that two are occupied for the work, two for loading, and two for unloading and the above operative group moves alternatively on one or the other of the three benches or bench groups.

## Claims

1. Bench machine with suction cups (B) for the manufacture of panels, of the type with upperplaced working groups (GO), **characterised by** the fact of having a back loading and unloading bench, with opposite loading (C1, C2) and unloading (C2, C3, C4) lines , being the said benches in multiple number (B) to allow the loading and unloading of the panels to be worked and processed, independent from panels in working and this by means of the movement of said working groups (GO) in association to moving means from and for said back movement bench (C1, C2, C3, C4), in order to operate in both opposite directions (c2).

2. Machine according to previous claim, for the manufacture of panels by means of retaining suction cups, of the type involving at least one panel support bench by raisable and lowerable suction cups (V) with system to double-acting dynamic-fluid cylinder, that is with lowering upper chamber (P1) and lifting lower chamber (P3), **characterised in that**:
- the said system of dynamic-fluid cylinder of said suction cups (V) involves furthermore an intermediate operating chamber (P2), upwards thrust adjuvant, in addition to the said lower one (P3);
- the said upper chamber (P1) is connected to a single dynamic-fluid pressure net (p1);
- the said intermediate chamber (P2) is connected by independent pipe-line with a second pressure net (p2), on the x-axis (X);
- the said lower chamber (P3) is connected by independent orthogonal pipe-line with a third pressure net (p3), on the axis of the ordinates (Y), of a corresponding diagram, or vice versa;
- all being associated to programming means able to coordinate the respective pressures (p1, p2, p3), in such a way that only a selected suction cup (V), determined by the crossing of said coordinates (X,Y) is operated at a time, in order that, proceeding for successive steps, only the desired suction cups of the entire suction cup set may be lowered and/or vice versa may be lifted.

3. Machine according to the previous claim, **characterised in that** the said lowering upper chamber (P1) has an annular seal in rabbet (21) that, with the lowering of the suction cup (V,2), widens the pressure surface increasing the thrust force downwards.

4. Work bench with suction cups according to either of claims 2 and 3, for a machine according to claim 1.

5. Machine according to previous claims, **characterised in that** it is with benches with suction cups (B) at least divisible in three in order that one is occupied for loading, one for the work and one for the unloading.

6. Machine according to the previous claim, **characterised in that** the work benches (B) are six in order that two are occupied for loading, two for work and two for the unloading and the above operative group (GO) moves alternatively on one or the other of the three benches or bench groups.

7. Dynamic-fluid system for activation of suction cups on work bench (B) for machines and work benches according to any of the previous claims.

8. Panel working line utilizing a machine having the characteristics according to any of the previous claims.
